Europäisches Patentamt

European Patent Office

Office européen des brevets

(19)

(11) Veröffentlichungsnummer: **0 233 647 B1**

(12) # EUROPÄISCHE PATENTSCHRIFT

(45) Veröffentlichungstag der Patentschrift: **17.04.91**

(51) Int. Cl.⁵: **C03B 5/16**, C03B 1/00, C03B 3/00, B01D 46/30

(21) Anmeldenummer: **87102346.1**

(22) Anmeldetag: **19.02.87**

(54) Verfahren und Einrichtung zum Erschmelzen von silikatischen Rohstoffen, insbesondere zur Herstellung von Mineralwolle.

(30) Priorität: **20.02.86 DE 3605509**

(43) Veröffentlichungstag der Anmeldung:
**26.08.87 Patentblatt 87/35**

(45) Bekanntmachung des Hinweises auf die Patenterteilung:
**17.04.91 Patentblatt 91/16**

(84) Benannte Vertragsstaaten:
**BE DE ES FR GB GR IT LU NL**

(56) Entgegenhaltungen:
**DE-A- 2 855 492       DE-A- 3 426 959
US-A- 4 225 332       US-A- 4 298 369
US-A- 4 353 726       US-A- 4 362 543**

(73) Patentinhaber: **Grünzweig + Hartmann Aktiengesellschaft
Bürgermeister-Grünzweig-Strasse 1-47
W-6700 Ludwigshafen am Rhein(DE)**

(72) Erfinder: **Naber, Wilfried
Eponastrasse 8
W-6802 Ladenburg(DE)**
Erfinder: **Ungerer, Heinz-Jürgen
Bensheimer Strasse 39
W-6806 Viernheim(DE)**
Erfinder: **Sistermann, Klaus
In der Almel 37
W-6730 Neustadt(DE)**

(74) Vertreter: **Kuhnen, Wacker & Partner
Schneggstrasse 3-5 Postfach 1553
W-8050 Freising(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Erschmelzen von silikatischen Rohstoffen, insbesondere zur Herstellung von Mineralwolle, vorzugsweise Steinwolle aus Basalt, nach dem Oberbegriff des Anspruchs I, sowie zur Durchführung des Verfahrens eine Einrichtung nach dem Oberbegriff des Anspruchs 4.

Beim Erschmelzen von silikatischen Rohstoffen wie insbesondere körnig vorliegendem Basalt, aber auch kompaktierte Pellets oder Scherben auf Silikatbasis, wird der Schmelzwanne zur Verbrennung fossiler Brennstoffe wie Öl eine große Luftmenge zugeführt, welche die Brennstoffe in einer großen Flamme an der Oberfläche des Schmelzbades verbrennt und eine entsprechende Menge an heißem Abgas erzeugt. Im Raum über der Badoberfläche nimmt der Abgasstrom aus der Schmelze stammende Verunreinigungen wie insbesondere Fluor, Chlor und Schwefeldioxid auf. Diese Verunreinigungen sind umweltschädlich und müssen daher vor dem Austritt der Wannenabgase in die Atmosphäre ausgefiltert werden. Insbesondere Fluor ist in der Schmelze zu einem bestimmten Anteil vor allem als Flußmittel enthalten, und es muß dafür gesorgt werden, daß aus der Schmelze austretendes Fluor wieder in die Schmelze zurückgeführt wird, um den dortigen Fluoranteil aufrechtzuerhalten. Diese Zusammenhänge sind etwa in der US-A-4 521 523 näher erläutert, auf die insoweit Bezug genommen wird.

Weiterhin liegt die Austrittstemperatur der Wannenabgase mit etwa 1400° C sehr hoch. Diese Energie soll einerseits zur Vorwärmung der Verbrennungsluft und des Rohstoffgemenges nutzbar gemacht werden, und muß andererseits vor einer Ausfilterung der Schadstoffe in einem Elektrofilter auf wenigstens 450° C oder in einem mechanischen Tuchfilter auf unter 200° C abgesenkt werden, um die Anwendungstemperaturen dieser Filter nicht zu überschreiten. Daher ist es vielfach bekannt, die Wannenabgase zunächst in vorzugsweise rekuperativen Wärmetausch mit der Verbrennungsluft zu führen und dabei den Wannenabgasen möglichst viel Wärme zu entziehen, sowie anschließend einen weiteren Wärmetausch mit dem Rohstoffgemenge herbeizuführen, wie dies beispielsweise aus den US-A-4 316 732, 4 330 314, 4 330 316, 4 338 112 sowie schließlich 4 362 543 ersichtlich ist.

Beim Wärmetausch zwischen den heißen Wannenabgasen und der mit Umgebungstemperatur eingeführten Verbrennungsluft wird eine möglichst kräftige Temperaturerhöhung der Verbrennungsluft angestrebt und so eine recht drastische Absenkung der Temperatur der Wannenabgase erreicht. Eine Erwärmung der Verbrennungsluft auf ca. 900° C geht so mit einem Temperaturabfall der Wannenabgase von 1400° C auf ca. 530° C einher. Beim Wärmetausch mit dem Rohstoffgemenge wird dieses auf ca. 450° C erwärmt, während die Temperatur der Wannenabgase auf etwa 300° C abfällt und die Wannenabgase mit dieser Temperatur in ein geeignetes Filter, im Beispielsfalle der US-A- 4 362 543 in ein elektrostatisch geladenes Schüttgutfilter, eingeführt werden, wo im stationären Betrieb allenfalls geringer Temperaturabfall erfolgt.

Bei Verwendung wassergebundener Pellets als Rohstoff wie im Falle der US-PSen 4 330 314 und 4 338 112 wird ein Teil der Wärmeenergie der Wannenabgase zur Vortrocknung der Pellets verwendet und beim Wärmetausch mit der Verbrennungsluft lediglich auf ca. 800° C abgekühlt, um den Wannenabgasen eine ausreichende Restenergie für die Vortrocknung der Pellets ohne Kondensatbildung zu erhalten. Eine so hohe Temperatur der Wannenabgase beim Eintritt in das Rohstoffgemenge erfordert eine Ausführung der Vorwärmeinrichtung für die Rohstoffe aus Spezialstählen, was sehr teuer ist, und führt andererseits zu einer nur unzureichenden Vorwärmung der Verbrennungsluft. Durch die Notwendigkeit einer Vortrocknung wird somit die Energiebilanz des Verfahrens verschlechtert.

Bei der Arbeit mit trockenem Rohstoffgemenge wird zwar eine gute Vorwärmung der Verbrennungsluft erzielt, jedoch erfolgt hier eine unzureichende Ausnutzung der Restenergie der Wannenabgase im Bereich der Rohstoffvorwärmung.

Bei einem aus der US-A-4 225 332 bekannten Verfahren, von dem der Anspruch 1 im Oberbegriff ausgeht, besteht der Rohstoffvorwärmer aus zwei übereinander angeordneten Kammern, welche vom Rohstoffgemenge von oben nach unten und von den Wannenabgasen von unten nach oben durchwandert werden. Zwischen beiden Kammern werden die Wannenabgase in Wärmetausch beispielsweise mit Verbrennungsluft gebracht. Dabei sollen die Wannenabgase beim Auslaß aus dem System eine Temperatur von nur etwas über 90° C haben. Bei dieser Temperatur besteht bereits eine erhebliche Gefahr einer Säurekondensation im Bereich des nachgeschalteten Kamins bzw. der nachgeschalteten Fil-ter` so daß besondere Maßnahmen für einen Betrieb der nachgeschalteten Elemente und Aggregate unter Säure an-fall getroffen werden müssen. Dies deshalb- weil in den Dannenabgasen enthaltene saure gasförmige aggressive Bestandteile wie Fluor bei der Vorwärmung des Rohstoffgemenges nur in geringem Umfange ausgefildert werden` da das Rohstoffgemenge keinen sehr wirksamen Filter darstellt.

Demgegenüber liegt der Erfindung die Aufgabe zugrunde, eine möglichst vollständige Ausnutzung der Energie der Wannenabgase zu erzielen, ohne den Bereich der nachgeschalteten Filter bzw. des Kamins säurefest ausführen zu müssen.

Die Lösung dieser Aufgabe erfolgt durch die kennzeichnenden Merkmale des Anspruchs 1.

Dadurch , daß die Wannenabgase nach der Vorwärmung des Rohstoffgemenges erneut mit der noch kühlen Verbrennungsluft in Wärmetausch gebracht werden, wird die Restenergie der Wannenabgase die hinter der Vorwärmung des Rohstoffgemenges noch eine Temperatur von z.B. 350 °C besitzen können, weiter ausgenutzt und eine Anwärmung der Verbrennungsluft von Umgebungstemperatur auf beispielsweise ca. 200 °C erreicht, wobei die Temperatur der Abgase auf 150 °C oder weniger abfallen mag. Die so angewärmte Verbrennungsluft tritt also bereits mit beispielsweise 200 °C - statt mit Umgebungstemperatur - im Verbrennungsluftvorwärmer in Wärmetausch mit den heißen Wannenabgasen, so daß auch bei Temperaturverlust der Wannenabgase im Vorwärmer von ca. 1400 °C auf beispielsweise 650 °C zur Maximierung der Vorwärmung des Rohstoffgemenges noch eine solche Wärmemenge auf die angewärmte Verbrennungsluft übergeht, welche deren Temperatur auf 1000 °C erhöhen mag. Auf diese Weise wird somit durch bessere Ausnutzung der Wärmeenergie der heißen Wannenabgase sowohl eine bessere Vorwärmung der Verbrennungsluft als auch eine bessere Vorwärmung des Rohstoffgemenges erzielt.

Während beim Wärmetausch in direkter Berührung mit dem Rohstoffgemenge je nach der dortigen Verfahrensführung eine mehr oder weniger großer Teil der im Wannenabgas mitgeführten Verunreinigungen, insbesondere Staub und aggressive Medien wie Fluor durch Anlagerung an den Rohstoffpartikeln abgeschieden und wieder der Schmelze zugeführt wird, liegen insbesondere gasförmige aggressive Medien wie Fluors, Chlor und Schwefeldioxid hinter dem Wärmetausch mit dem Rohstoffgemenge durchaus noch in merklichen Mengen im Wannenabgas vor. Dies steht einer zu starken Temperaturabsenkung der Wannenabgase bei Anwärmung der Verbrennungsluft entgegen, da bei niedrigen Temperaturen der Wannabgase beim Eintritt in den Kamin von beispielsweise 150 °C oder weniger durch Unterschreiten des Taupunktes Säurekondensation auftritt, welche eine säurefeste Ausführung des Kamins erforderlich machen würde. Durch die Reinigung der Wannenabgase von sauren gasförmigen aggressiven Medien wie Fluor im Anschluß an die Vorwärmung des Rohstoffgemenges werden den Wannenabgasen säurebildende Verunreinigungen - zusammen mit anderen Verunreinigungen - entzogen, so daß auch eine starke Abkühlung der Wannenabgase keine Gefahr einer schädlichen Säurekondensation mit sich bringt. Die starke Absenkung der Temperatur der Wannenabgase ermöglicht die vollständige Ausschöpfung des nutzbaren Wärmeinhalts und vermindert die Temperaturbelastung des nachgeschalteten Wärmetauschers, der nachgeschalteten Filter usw., ohne daß die Gefahr einer Säurekondensation besteht.

während die Vorwärmung der Verbrennungsluft an den heißen Wannenabgasen bei großen Temperaturunterschieden in konstruktiv einfacher Weise bevorzugt in einem rekuperativen Wärmetauscher beispielsweise aus Keramikmaterial erfolgt, eignet sich für die Anwärmung der Verbrennungsluft gemäß Anspruch 2 besonders ein regenerativer Wärmetauscher , da dieser auf kleinstem Raum eine relativ große Wärmeübertragungsfläche besitzt und deshalb ein guter Wirkungsgrad erzielt werden kann.

Gemäß Anspruch 4 werden mit besonderem Vorteile nicht nur die im Rohstoffgemenge abgeschiedenen Verunreinigungen, sondern auch die im Zuge der weiteren Reinigung abgeschiedenen Verunreinigungen wie insbesondere der Schmelze entzogene wichtige Zuschlagstoffe wie Fluor der Schmelze wieder zugeführt.

Eine zur Durchführung des Verfahrens geeignete Einrichtung ergibt sich aus Anspruch 4.

Für die Vorwärmung des Rohstoffgemenges kann mit besonderem Vorteil auf eine grundsätzliche Bauform zurückgegriffen werden, wie sie aus der DE-OS 28 55 492 bekannt ist. Eine solche Bauform sichert auf konstruktiv einfache Weise eine innige Berührung zwischen dem Wannenabgas und dem Rohstoffgemenge.

Allerdings werden dabei relativ hohe Relativgeschwindigkeiten auch im Austrittsbereich des Wannenabgases aus dem Rohstoffgemenge erzielt, was zu einer Mitführung einer erheblichen Menge von Verunreinigungen, insbesondere Staub, mit dem aus dem Rohstoffvorwärmer austretenden Wannenabgasstrom führt.

Daher ist im Rahmen der Erfindung gemäß Anpruch 5 vorgesehen, daß eine Mehrzahl von verteilt angeordneten Eintritts-und Austrittsöffnungen vorgesehen ist, die je entsprechende Strömungskanäle aufweisen und einander zugeordnet sind. Hierdurch wird bei homogener Verteilung des Wannenabgases im Rohstoffgemenge eine Verminderung der Strömungsgeschwindigkeit der Wannenabgase insbesondere im Austrittsbereich erzielt, so daß die von den Wannenabgasen wieder aus dem Rohstoffgemenge ausgetragenen Mengen an Verunreinigungen, insbesondere Staub, minimiert werden.

Für die dem Rohstoffvorwärmer nachgeschaltete Reinigungseinrichtung für die Wannenabgase wird bevorzugt auf eine grundsätzliche Bauform zurückgegriffen, wie sie aus der US-PS 4 362 543 bekannt .

Bei dieser bekannten Reinigungseinrichtung durchlaufen die Filterkörner den engkammerigen Behälter im Durchlauf von oben nach unten und werden dabei von den Wannenabgasen durchströmt, wobei durch elektrostatische Aufladung der Filterkörner eine Anhaftung von Verunreinigungen an den Filterkörnern bewirkt werden soll. Die verbrauchten Filterkörner werden einer Expansionskammer zugeführt, wo die Seperierung der Filterkörner von den anhaftenden Verunreinigungen in Staubform erfolgt.

Abgesehen davon, daß die elektrische Aufladung der Filterkörner die Komplexität und Störanfälligkeit der Anlage erhöht, ist sie auch nur begrenzt wirksam, um Staub an den sich bewegenden Filterkörnern festzuhalten. Daher wird ein erheblicher Anteil von Staub und im Staub enthaltenen eingedrungenen gasförmigen Verunreinigungen aus der Reinigungseinrichtung entweichen.

Um dies zu vermeiden, ist gemäß Anspruch 6 vorgesehen, daß der Behälter der Reinigungseinrichtung in einzelne Kammern unterteilt ist, in denen die ruhenden Filterkörner von den Wannenabgasen durchströmbar sind, und daß verbrauchte Filterkörner aus der jeweiligen Kammer erst ausgetragen werden, nachdem diese Kammer vom Strom der Wannenabgase abgeschlossen ist. Auf diese Weise wird erreicht, daß die Wannenabgase stets ruhende Filterkörner durchströmen, welche anhaftenden Staub nicht infolge von Relativbewegungen wieder frei geben, daß aber dennoch im kontinuierlichen Betrieb ein Austrag verbrauchter Filterkörner und deren Ersatz durch frische Filterkörner erfolgen können. Selbstverständlich schließt dies nicht aus, daß zusätzliche weitere Maßnahmen zur Staubabscheidung im System etwa in Form von Zyklonabscheidern ergriffen werden können, und daß Maßnahmen zur weiteren Verbesserung der Anhaftung von Staub an den Filterkörnern wie eine elektrische Aufladung ergriffen werden können.

Gemäß Anspruch 7 werden die Wannenabgase in die Schüttung der Filterkörner in den einzelnen Kammern durch Strömungskanäle ein- und ausgetragen, welche durch eine dachförmige obere Abdeckung und darunter im natürlichen Böschungswinkel liegende Filterkörner begrenzt sind. Auf diese Weise ist - ähnlich wie bei der Vorrichtung zur Vorwärmung des Rohstoffgemenges - ein homogener Eintrag bei großer Berührungsintensität der Wannenabgase mit den Filterkörnern gewährleistet.

Dabei können die Strömungskanäle gemäß Anspruch 8 übereinander derart auf Lücke versetzt angeordnet werden, daß die an den Seitenrändern zweier benachbarter Eintrittskanäle auftretenden Wannenabgase in einem gemeinsamen, darüberliegenden Austrittskanal wieder gesammelt und abgeführt werden, wobei der Eintritt und der Austritt der Wannenabgase an gegenüberliegenden Seiten des Behälters erfolgen.

In konstruktiv besonders einfacher Weise ist dabei gemäß Anspruch 9 an der Eintrittsseite der Strömungskanäle ein allen Kammern gemeinsamer Abgasvorlageraum angeordnet, von dem aus die Wannenabgase in die offenen Enden aller Eintrittskanäle gelangen können, während auf der gegenüberliegenden Seite der Austritt der Wannenabgase in jeweils für jede Kammer separate Abgassammelräume erfolgt, die selektiv absperrbar sind. Durch die Absperrung eines Abgassammelraumes wird damit strömungstechnisch auch der Eintritt von Wannenabgasen aus dem Abgasvorlageraum unterbunden, so daß keine Strömung vorhanden ist und bei einer Entleerung der Kammer von verbrauchten Filterkörnern kein frei werdender Staub ausgetragen werden kann.

Die Abteilung der Kammern untereinander erfolgt dabei gemäß Anspruch 10 vorteilhaft so, daß die Trennwände zwischen den Kammern in der Vertikalebene von Einlaßkanälen liegen und diese somit halbieren und je hälftig einer der benachbarten Kammern zuordnen. Damit ist auch bei engen Kammern, deren Breite geringer ist als die doppelte Breite zweier V-förmiger Dächer der Strömungskanäle gewährleistet, daß ein Austrittskanal stets einem einzigen, der jeweiligen Kammer zugeordneten Abgassammelraum zugeordnet ist, während die zum gemeinsamen Abgasvorlageraum hin offenen Eintrittskanäle ohnehin einer eindeutigen Zuordnung zu einer Kammer nicht bedürfen.

Die Regenerierung der Filterkörner erfolgt nach der Lehre der US-A- 4 362 543 in einer Separationskammer, in der an den Filterkörnern anhaftender Staub abgetrennt und der Schmelzwanne zugeführt wird, während die so von Staub gereinigten Filterkörner wieder dem Behälter der Reinigungseinrichtung zugeführt werden. Hierdurch erfolgt jedoch deshalb keine Regenerierung der Filterkörner mit Bezug auf ihre Aufnahmefähigkeit für gasförmige Verunreinigungen, insbesondere für ihre Fluorsorptionsfähigkeit. Fluor ist in der Lage, sehr tief in die Kristallgitterstruktur des Filterkorns einzudringen, so daß eine an sich hohe Sorptionsfähigkeit für Fluor vorliegt. Diese wird jedoch dadurch behindert, daß andere gasförmige Verunreinigungen wie insbesondere Chlor lediglich in oberflächennahen Bereichen sorpiert werden und dann als Hemmschicht für ein weiteres Eindringen von Fluor wirken. Daher ist die Sorptionsfähigkeit von Filterkörnern bei einer Behandlung nach der Lehre der US-A- 4 362 543 schnell erschöpft, obwohl lediglich eine oberflächenseitige Sättigung mit gasförmigen Verunreinigungen vorliegt, während die inneren Bereiche des Filterkornes für viele gasförmige Verunreinigungen wie insbesondere Chlor ohnehin nicht erreichbar sind und für Fluor nicht erreichbar sind, weil es die äußere Hemmschicht aus anderen Verunreinigungen nicht zu durchdringen vermag.

Daher ist gemäß Anspruch II in besonders bevorzugter Ausgestaltung der Erfindung vorgesehen, daß eine Regenerierung der Filterkörner in der Reinigungseinrichtung in der Weise durchgeführt wird, daß neben einer Separierung des Staubes auch Oberflächenschichten der Filterkörner abgerieben werden, in welchen die Verunreinigungen konzentriert sind, und tiefer liegende Schichten freigelegt werden, so daß erneut ein ungehemmtes tiefes Eindringen von Fluor sowie eine abermalige oberflächennahe Sorption der anderen Verunreinigungen wie insbesondere Chlor möglich ist.

Gemäß Anspruch I2 ist die Einrichtung zum Abrieb der Oberflächenschichten in besonders einfacher, störungssicherer und wirksamer Weise als Schüttelsieb ausgebildet. Die abrasive Wirkung des Schüttelsiebs wird gemäß Anspruch I3 dadurch unterstützt, daß bereits die Förderung der zu regenerierenden Filterkörner zwischen dem Behälter und dem Schüttelsieb oder einer anderen Einrichtung zum Abrieb von Oberflächenschichten durch Schwingförderer erfolgt, auf denen bereits der Abrieb beginnt.

weitere Einzelheiten, Merkmale und Vorteile der Erfindung ergeben sich aus der nachfolgenden Beschreibung einer Ausführungsform anhand der Zeichnung.

Es zeigt

Fig. I     eine schematische Darstellung der erfindungsgemäßen Verfahrensführung,

Fig. 2     ebenfalls schematisch vereinfacht eine perspektivische Darstellung des Behälters der Reinigungseinrichtung mit teilweise weggebrochenen Wänden und

Fig. 3     eine Prinzipskizze der Reinigungs- und Regenerierungseinrichtung.

In Fig. I ist mit I eine übliche Schmelzwanne bezeichnet, wie sie zum Erschmelzen von silikatischen Rohstoffen etwa zur Herstellung von Mineralfasern dient. Zur Zuführung der Wärmeenergie für den Schmelzprozeß wird in den Raum oberhalb der Schmelze bei 2 Verbrennungsluft und bei 3 ein fossiler Brennstoff wie Gas oder Öl eingeführt, welche an der Oberseite der Badoberfläche eine langgezogene Flamme bilden. Die dabei erzeugten Wannenabgase werden über einen schematisch angedeuteten Kanal 4 aus der Schmelzwanne I abgeführt und einem Wärmetauscher 5 im Beispielsfalle in Form eines Gegenstrom-Rekuperators zugeführt, dem über eine Leitung 6 Verbrennungsluft als das vorzuwärmende, Wärme aus dem Wannenabgas aufnehmendes Medium zugeführt wird. Die Verbrennungsluft gelangt aus dem Wärmetauscher 5 über eine Leitung 7 zur Schmelzwanne I, während die Wannenabgase vom Wärmetauscher 5 über eine Leitung 8 einem Rohstoffvorwärmer 9 zugeführt werden. Der Rohstoffvorwärmer 9 wird in der mit Pfeil I0 angedeuteten Weise mit Rohstoffgemenge von Umgebungstemperatur beschickt, und gibt seinerseits gemäß Pfeil II das an den Wannenabgasen vorgewärmte Rohstoffgemenge in die Schmelzwanne I ab.

Der Rohstoffvorwärmer 9 weist einen Vorlagebehälter I2 für das Rohstoffgemenge auf, der an seiner einen Seite Eintrittsöffnungen I3 und an seiner gegenüberliegenden Seite Austrittsöffnungen I4 für die Wannenabgase aufweist. Die Eintrittsöffnungen I3 führen in Eintritts-Strömungskanäle I5 für die Wannenabgase, welche an ihrer Oberseite durch ein umgekehrt V-förmiges Dach I6 aus Blech und an ihrer Unterseite durch entsprechend im natürlichen Böschungswinkel liegendes Rohstoffgemenge begrenzt sind. An ihrer den Eintrittsöffnungen I3 gegenüberliegenden Seite sind die Eintritts-Strömungskanäle I5 durch die entsprechende Seitenwand des Vorlagebehälters I2 abgeschlossen.

Durch entsprechend auf Lücke versetzt über den Eintritts-Strömungskanälen I5 angeordnete umgekehrt V-förmige Dächer I7 werden entsprechende Austritts-Strömungskanäle I8 gebildet, deren eines Ende durch die die Eintrittsöffnungen I3 aufweisende Wand des Vorlagebehälters I2 abgeschlossen sind und deren andere Enden durch die Austrittsöffnungen I4 gebildet sind. Somit strömen Wannenabgase aus der Leitung 8 durch die Eintrittsöffnungen I3 in die Eintritts-Strömungskanäle I5 hinein, treten an deren Seitenkanten in das Rohstoffgemenge ein und durchströmen dieses gemäß den veranschaulichten Pfeilen I9, werden in den oberen Austritts-Strömungskanälen I8 wieder gesammelt und verlassen den Vorlagebehälter I2 der Reinigungseinrichtung 9 durch die Austrittsöffnungen I4 hindurch in eine Leitung 20 hinein.

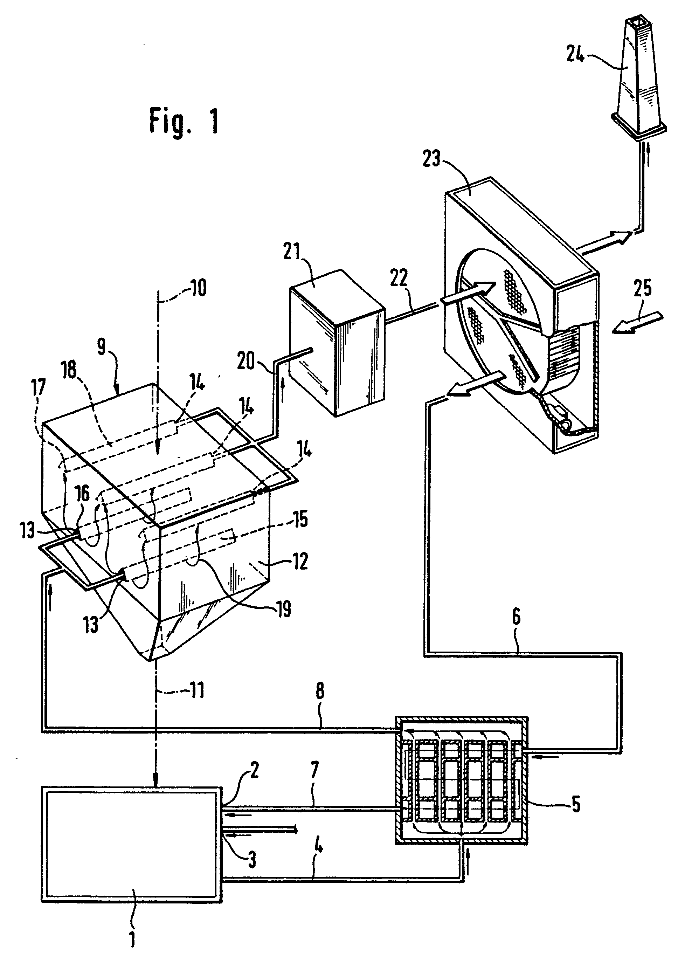

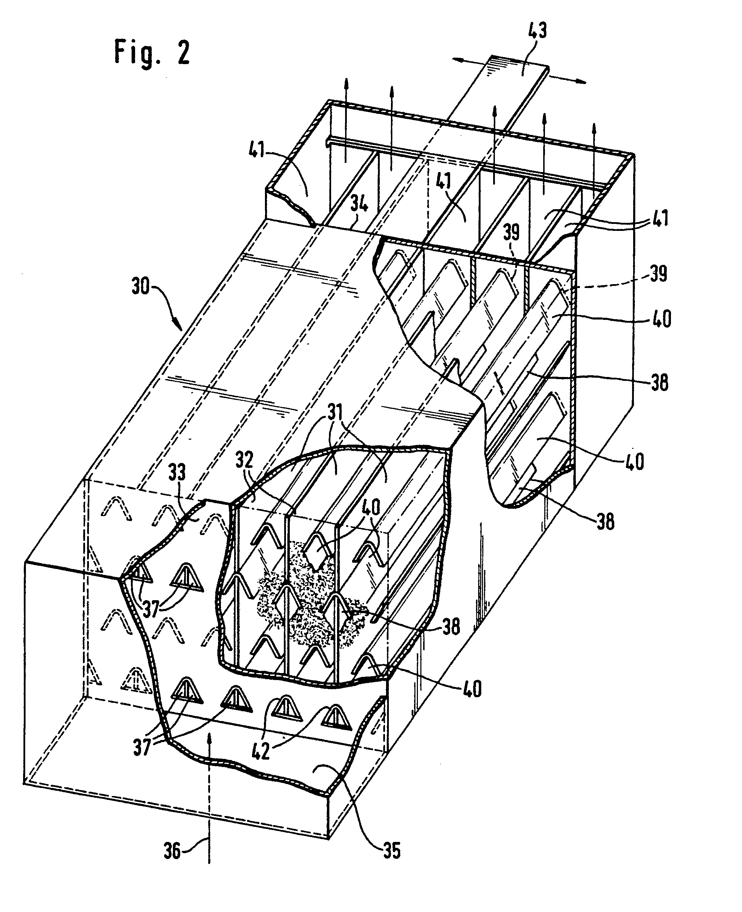

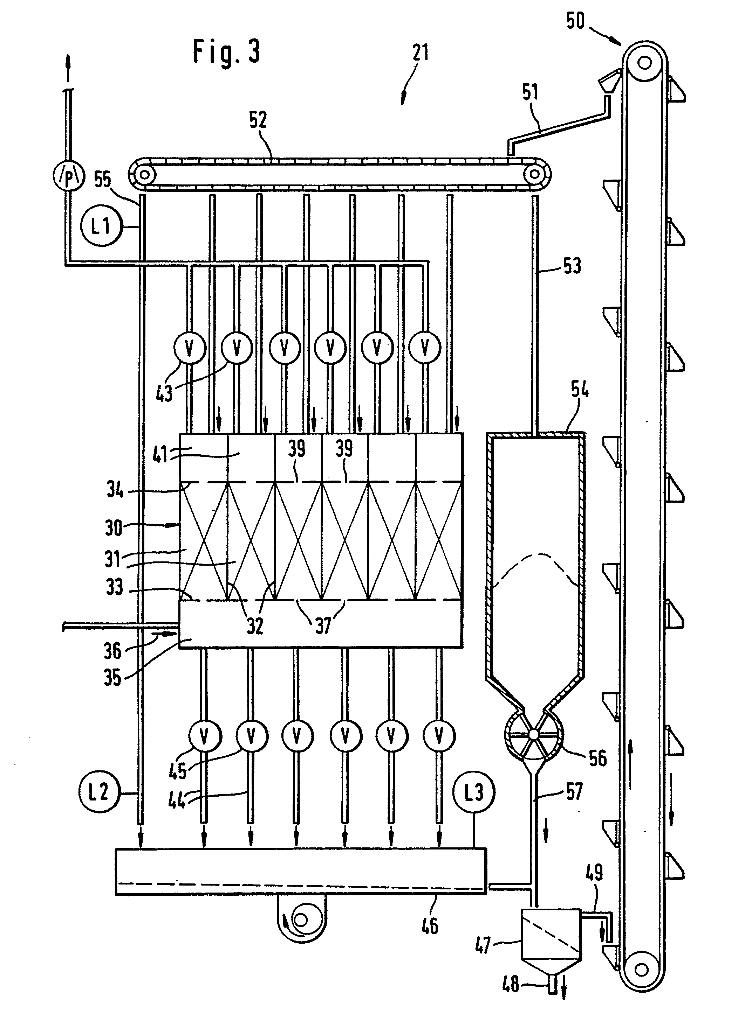

Die Leitung 20 führt zu einer insgesamt mit 2I bezeichneten und in Fig. I nur schaltbildmäßig angedeuteten Reinigungseinrichtung, welche weiter unten anhand der Fig. 2 und 3 näher erläutert wird. Aus der Reinigungseinrichtung 2I treten die Wannenabgase über eine Leitung 22 in einen Regenerator, der im vorliegenden Fall als Rotationswärmetauscher 23 ausgebildet ist, und gelangen von dort in einen Abzugskamin 24, wo gegebenenfalls nochmals eine Endreinigung oder Filterung der Wannenabgase erfolgen kann. Der Wärmetauscher 23 dient zur Anwärmung von gemäß Pfeil 25 angesaugter Umgebungsluft, welche anschließend über die Leitung 6 dem Wärmetauscher 5 zugeführt wird.

Um im Wärmetauscher 5 eine Erhöhung der Verbrennungslufttemperatur von Umgebungstemperatur, also etwa 20 bis 30° C, auf ca. 900° C zu erhalten, muß den Wannenabgasen, die im Abgaskanal 4 mit einer Temperatur von etwa I400° C vorliegen, so viel Wärmemenge entzogen werden, daß ihre Temperatur auf etwa 530°C sinkt. Damit kann eine Vorwärmung des Rohstoffgemenges im Rohstoffvorwärmer 9 nur auf etwa 450°C erfolgen, während die Wannenabgase in den Leitungen 20 bzw. 22 mit etwa 300 bis 350°C vorliegen würden und ohne Verwendung des Wärmetauschers 23 mit dieser Temperatur in die Umgebung entweichen würden.

Dadurch, daß im Wärmetauscher 23 erfindungsgemäß eine Anwärmung der Verbrennungsluft von Umgebungstemperatur zwischen -20°C an kalten Wintertagen und 30°C an warmen Sommertagen erfolgt, ergibt sich in der Leitung 6 eine Temperatur der angewärmten Verbrennungsluft zwischen rund 130°C und 180°C. Diese angewärmte Verbrennungsluft kann im Wärmetauscher 5 im Wärmetausch mit den 1400°C heißen Abgasen auf eine höhere Temperatur von im Beispielsfalle 950°C erwärmt werden, was dennoch aber nur zu einem verminderten Temperaturabfall der Wannenabgase in der Leitung 8 auf 600 bis 650°C führt. Hiermit kann eine Vorwärmung des Rohstoffgemenges im Rohstoffvorwärmer 9 auf eine ebenfalls höhere Temperatur von 520 bis 580°C erfolgen, wobei die Temperatur der Wannenabgase in der Leitung 8 so hoch gewählt werden kann, daß die Anwendungstemperatur des Rohstoffvorwärmers 9 auch an warmen Tagen gerade nicht überschritten wird. Ohne Verwendung von Sondermaterialien wie Keramik entspricht dies einer Temperatur von etwa 650°C der Wannenabgase in der Leitung 8.

Im stationären Betrieb ist die Temperatur der Wannenabgase in den Leitungen 20 und 22 im wesentlichen gleich mit 300 bis 350°C, so daß die Wannenabgase mit dieser Temperatur zur Anwärmung der Verbrennungsluft im Wärmetauscher 23 zur Verfügung stehen und dabei auf 150 bis 200°C abgekühlt werden.

Insgesamt ergibt sich somit eine Ausnutzung der Wärmeenergie der Wannenabgase nicht nur bis auf etwa 300°C, sondern bis auf etwa 150°C herunter, und hierdurch eine Erhöhung sowohl der Vorlagetemperatur der Verbrennungsluft in der Leitung 7 als auch der Vorwärmtemperatur des Rohstoffgemenges im Rohstoffvorwärmer 9, was mit entsprechender Einsparung an fossilen Brennstoffen beim Betrieb der Schmelzwanne 1 einhergeht. Im Bereich des Abgaskamines 24 können die Wannenabgase mit einer Temperatur vorliegen, welche die Anwendungstemperatur von Filtertüchern oder dergleichen nicht mehr überschreitet, so daß eine einfache Endreinigung der Wannenabgase möglich ist. Dadurch, daß insbesondere die stärkere Gemengevorwärmung die Energie zum Aufschmelzen des Gemenges in der Schmelzwanne 1 vermindert, kann die Badtemperatur geringer gehalten werden, was mit einer verminderten Schadstoff-, insbesondere Fluoremission einhergeht, so daß schon von daher die Fluorbelastung des Wannenabgases vermindert ist. Ein Teil des Fluors wird durch Anlagerung am Rohstoffgemenge sogleich wieder in die Schmelzwanne 1 eingetragen.

Dennoch sind die Wannenabgase in der Leitung 20 noch in durchaus erheblichem Umfang durch Staub und insbesondere aggressive gasförmige Bestandteile, insbesondere Fluor, verunreinigt, so daß der Reinigungseinrichtung 21 primär die Funktion eines Korrosionsschutzes für den nachfolgenden Wärmetauscher 23 zukommt. Weiterhin ergibt eine möglichst vollständige Ausscheidung der aggressiven gasförmigen Verunreinigungen wie Fluor, Chlor und Schwefeldioxid eine Absenkung des Säuretaupunkts und gestattet somit die Abkühlung der Wannenabgase auf eine niedrige Temperatur, ohne daß Säureanfall zu befürchten ist. Aus diesen Gründen sowie auch zur möglichsten vollständigen Wiedergewinnung der Verunreinigungen der Wannenabgase als notwendige Bestandteile der Schmelze kommt der Reinigungseinrichtung 21 im Zusammenhang mit der vorliegenden Erfindung erhebliche Bedeutung bei.

In Fig. 2 ist in einer perspektivischen Ansicht ein Behälter 30 zur Aufnahme von kalkhaltigen Filterkörnern veranschaulicht, der von dem Wannenabgas aus der Leitung 20 durchströmbar ist.

Der Behälter 30 ist in eine Mehrzahl von im Beispielsfalle sechs Kammern 31 unterteilt, die durch Trennwände 32 voneinander abgetrennt sind und gemeinsam an der eintrittsseitigen Stirnseite durch eine Abdeckwand 33 sowie an der gegenüberliegenden Austrittsseite durch eine Abdeckwand 34 abgeschlossen sind. Die eintrittsseitige Abdeckwand 33 begrenzt einen allen Kammern gemeinsamen Abgasvorlageraum 35, in den die Wannenabgase gemäß Pfeil 36 einströmen, und weist Eintrittsöffnungen 37 im Bereich der Trennwände 32 auf, welche in Eintritts-Strömungskanäle 38 innerhalb der Kammern 31 führen. Die gegenüberliegende Abdeckwand 34 weist Austrittsöffnungen 39 auf, zu denen Austritts-Strömungskanäle 40 führen, und die in Abgassammelräume 41 münden, die je eine der Kammern 31 zugeordnet sind.

Die Strömungskanäle 38 und 40 sind in dem Bett aus Filterkörnern durch umgekehrt V-förmige Dächer 42 gebildet, welche an ihrer Unterseite den Strömungskanal 38 oder 40 zusammen mit den im natürlichen Böschungswinkel liegenden Filterkörnern begrenzen. Die Austritts-Strömungskanäle 40 sind dabei auf Lücke oberhalb der Eintritts-Strömungskanäle 38 derart angeordnet, daß die an den Seitenkanten der Dächer 42 zweier benachbarter Eintritts-Strömungskanäle 38 austretenden und in das Bett der Filterkörner eintretenden Wannenabgase in einem dazwischen und darüber angeordneten Austritts-Strömungskanal 40 wieder gesammelt und durch die zugehörige Austrittsöffnung 39 in der Wand 34 dem entsprechenden Abgassammelraum 4l zugeführt werden. Hierzu sind die Eintritts- Strömungskanäle 38 durch die Abdeckwand 34 und die Austritts-Strömungskanäle 40 durch die Abdeckwand 33 abgeschlossen. Im Beispielsfalle halbieren die Trennwände 32 die Eintritts-Strömungskanäle 38 derart, daß je eine Hälfte einer zweier benachbarten Kammern 3l zugeordnet ist, während die Austritts-Strömungskanäle 40 im Mittelbereich der entsprechenden Kammer 3l angeordnet sind.

Zum selektiven Abschluß eines Abgassammelraumes 4l ist ein bewegliches Absperrorgan 43 vorgesehen. Wird das Absperrorgan 43 in der in Fig. 2 angedeuteten Weise in eine Absperrstellung bezüglich einem Abgassammelraum 4l einer Kammer 3l gebracht, so ist damit eine Einströmung der Wannenabgase aus dem Abgasvorlageraum 35 in die unverändert offene Eintrittsöffnung 37 der zugeordneten Kammer 3l unterbunden, da keine Abströmung mehr möglich ist. Dadurch, daß die Austrittsöffnungen 39 immer nur einem Abgassammelraum 4l alleine zugeordnet sind, und die Eintritts- Strömungskanäle 38 zwischen benachbarten Kammern 3l durch die Trennwände 32 abgeschlossen sind, können keine Strömungen aus einer durch das Absperrorgan 43 abgeschlossenen Kammer 3l auftreten.

Im Betrieb wird durch das Absperrorgan 43 stets eine der Kammern 3l abgeschlossen und damit von der Durchströmung ausgeschlossen. Die Filterkörner aus dieser Kammer werden in der nachfolgend noch näher erläuterten Weise entleert, von Staub befreit, regeneriert und, gegebenenfalls ergänzt durch frische Filterkörner, wieder in die entsprechende - oder auch eine nachfolgend entleerte Kammer 3l -eingeführt, wonach durch Verschieben des Absperrorganes 43 diese Kammer wieder für die Durchströmung freigegeben und eine andere Kammer 3l abgeschlossen wird, so daß deren Filterkörner regeneriert werden können. Auf diese Weise durchströmen die Wannenabgase stets ein ruhendes Bett an Filterkörnern, so daß angelagerter Staub tatsächlich haften bleibt und nicht in die Abgassammelräume 4l sowie nachfolgend die Leitung 32 gelangt, wie dies bei während des Sorptionsvorganges bewegter Schüttschicht zwangsläufig der Fall wäre.

In Fig. 3 ist schematisch der Behälter 30 mit den Kammern 3l, dem Abgasvorlageraum 35 und den Abgassammelräumen 4l sowie schaltbildlich das Absperrorgan 43 dargestellt. Auf der Materialaustrittsseite sind zur Entfernung verbrauchter Filterkörner Schächte 44 mit Absperrorganen 45 vorgesehen, durch welche hindurch auszutragende Filterkörner auf einen Schwingförderer 46 in Form einer Schwingrinne gelangen. Über die Schwingrinne 46 werden die verbrauchten Filterkörner einem Schwing- oder Schüttelsieb 47 zugeführt, der zusammen mit dem Schwingförderer 46 als Regenerierungseinrichtung für die Filterkörner dadurch wirkt, daß oberflächenseitiger Staub freigeschüttelt sowie Oberflächenbereiche der Filterkörner abgerieben werden, und zusammen mit dem Staub über eine Leitung 48 der Schmelzwanne zugeführt werden. Die gereinigten Filterkörner gelangen über eine Leitung 49 zu einem Becherwerk 50 und von dort über eine Leitung 5l auf einen Trogkettenförderer 52.

Der Schwingförderer 46 ist nach Art einer Bunkerabzugsrinne ausgeführt; durch den Einbau von mitschwingenden Zwischenböden und Dosierschiebern ist es möglich, gleichzeitig aus mehreren Kammern 3l des Behälters 30 der Reinigungseinrichtung Schüttgutmaterial dosiert abzuziehen.

Der Trogkettenförderer 52 übernimmt die Verteilung der Filterkörner auf die verschiedenen Kammern 3l des Behälters 30. Im Reversierbetrieb kann das Filtermaterial über eine Leitung 53 einem Vorratssilo 54 zugeführt werden. Weiterhin ist der Trogkettenförderer 52 mit einer Überlaufleitung 55 versehen, die mit Füllstandssonden $L_1$ und $L_2$ be- stückt ist.

Die Befüllung der Kammern 3l des noch leeren Behälters 30 erfolgt aus dem Vorratssilo 54 heraus über eine Zellenradschleuse 56 und eine Leitung 57. Von dort gelangen die Filterkörner aus dem Vorratssilo 54 auf den als Kreisschwingsieb ausgebildeten Schüttelsieb 47, zum Becherwerk 50. Die Einschaltung des Schüttelsiebes 47, staubfrei in die Kammern 31 des Behälters 30 gelangen.

Im Betrieb erfolgt in der im Zusammenhang mit Fig. 2 erläuterten Weise eine Anreicherung der Filterkörner mit abgeschiedenem Staub sowie eine Sorption insbesondere von Fluorverbindungen. Durch die Staubanreicherung steigt der auslaßseitige Druckverlust des Wannenabgases beim Durchströmen der Reinigungseinrichtung 2l an. Dieser Druckanstieg kann als Startgröße für den Beginn einer Regenerierung ermittelt werden.

Sobald die maximal zugelassene Druckdifferenz erreicht wird, wird der Abgasschieber 43 für die betreffende Kammer 3l geschlossen. Ausgelöst durch einen Endschalter öffnet das entsprechende Absperrorgan 45 in der Austragleitung 44 für die Filterkörner. Der Schwingförderer 46 transportiert die herauslaufenden Filterkörner zum Schüttelsieb 47. Sobald eine Sonde $L_3$ an der Abwurfkante des Schwingförderers 46 Material anzeigt, startet die Regenerationszeit für die entsprechende Kammer 3l.

Nach Staubabscheidung und Oberflächenabrieb im Bereich des Schüttelsiebes 47 erfolgt die Rückforderung über das Becherwerk 50 und den Trogkettenförderer 52 in die entsprechende Kam- mer 3l.

Die Sonde $L_2$ im unteren Teil der Überlaufleitung 55 zwischen dem Trogkettenförderer 52 und dem Becherwerk 50 dient zur Ansteuerung der Zellenradschleuse 56. Sobald die untere Sonde $L_2$ keine in der Überlaufleitung 55 mehr vorliegende Filterkörner anzeigt, wird die Zellenradschleuse 56 eingeschaltet und bis zur positiven Anzeige der Sonde $L_2$ neues Filtermaterial aus dem Vorratssilo 54 zudosiert sowie über den Schüttelsieb 47, das Becherwerk 50 und den Trogkettenförderer 52 der Überlaufleitung 55 zugeführt. Auf diese Weise ist sichergestellt, daß der Durchgang durch den Schüttelsieb 47 automatisch stets aus dem Vorratssilo 54 ausgeglichen wird.

Nach Ablauf der Regenerationszeit wird das entsprechende Absperrorgan 45 in der Austragsleitung 44 geschlossen, und sobald die Sonde $L_3$ negativ wird, gilt die Regenerierung als beendet. Es wird erneut das Absperrorgan 43 der betreffenden Kammer 3l geöffnet und so eine Durchströmung mit Wannenabgasen ermöglicht.

Die Sonde $L_1$ im oberen Teil der Überlaufleitung 55 dient ausschließlich zur Absicherung gegen Überfüllung. Bei positiver Anzeige geht der Trogkettenförderer 52 in Reversierbetrieb und transportiert das überschüssige Filtermaterial in das Vorratssilo 54 zurück.

Wie aus den vorstehenden Erläuterungen ersichtlich ist, ermöglicht der Aufbau der Reinigungseinrichtung 2l eine kompakte Bauweise und damit große Filter-Leistungsdichte bei einfacher und robuster Konstruktion, da außer Absperrorganen keinerlei bewegten Teile im Bereich des eigentlichen Filterbehälters 30 vorhanden sind. Eine einfache und störungssichere Abgaszu- und -abfuhr sowie homogene Durchströmung des Filtermaterials mit Wannenabgasen ist gewährleistet. Das Mehrkammersystem und der modulare Aufbau ergeben einerseits Flexibilität in der Auslegung und andererseits trotz periodischer Reinigungsvorgänge einen quasi-kontinuierlichen Betrieb. Die automatische Regenerierung erfordert keine Bedienungseingriffe von außen und stellt bei größtmöglicher Sparsamkeit mit Filtermaterial eine optimale Regenerierung der Filterkörner sowohl zur Staubabscheidung als auch zur Sorption von gasförmigen Verunreinigungen wie insbesondere Fluor sicher.

**Ansprüche**

1. Verfahren zum Erschmelzen von silikatischen Rohstoffen, insbesondere zur Herstellung von Mineralwolle, vorzugsweise Steinwolle aus Basalt,
   bei dem die Schmelzwärme durch Verbrennung fossiler Brennstoffe einer Schmelzwanne (1) zugeführt wird, und
   bei dem mittels der Wannenabgase zunächst die Verbrennungsluft sowie anschließend im Direktkontakt das zugeführte Rohstoffgemenge vorgewärmt werden, wobei die Vorwärmung der Verbrennungsluft lediglich bis zu einer solchen Temperaturabsenkung der wannenabgase geführt wird, welche der maximal zulässigen Eintrittstemperatur in den Bereich des Rohstoffvorwärmers (9) entspricht,
   dadurch gekennzeichnet,
   daß die Wannenabgase nach der Vorwärmung des Rohstoffgemenges erneut mit der noch kühlen Verbrennungsluft in Wärmetausch gebracht werden, und
   daß die Wannenabgase zwischen der Rohstoffvorwärmung (9) und der weiteren Verbrennungsluftvorwärmung (23) zur weitestgehenden Ausnutzung des Restwärmeinhaltes der Wannenabgase ohne Säurekondensation von sauren gasförmigen aggressiven Medien wie Fluor gereinigt (Reinigungseinrichtung 21) werden.

2. Verfahren nach Anspruch 1, dadurch gekennzeichnet, daß der weitere Wärmetausch mit der Verbrennungsluft regenerativ durchgeführt wird.

3. Verfahren nach Anspruch 1 oder 2, dadurch gekennzeichnet, daß die abgeschiedenen Verunreinigungen der Schmelze wieder zugeführt werden.

4. Einrichtung zur Durchführung des Verfahrens nach einem der Ansprüche 1 bis 3, mit einer fossil befeuerten Schmelzwanne (1), mit einem von den Wannenabgasen durchströmten Vorwärmer (5) für Verbrennungsluft und mit einem Gemengevorwärmer (9), der im Strömungsweg der Wannenabgase hinter den Vorwärmer (5) eingeschaltet ist und in dem die Wannenabgase in direkten Kontakt mit dem Rohstoffgemenge gelangen,
   dadurch gekennzeichnet, daß
   dem Gemengevorwärmer (9) eine Reinigungseinrichtung (21) für die Wannenabgase zur Beseitigung von sauren gasförmigen aggressiven Medien wie Fluor nachgeschaltet ist, und daß der Reinigungseinrichtung (21) wiederum ein zweiter Vorwärmer (23) für Verbrennungsluft nachgeschaltet ist, der im Strömungsweg der Verbrennungsluft dem ersten Vorwärmer (5) für Verbrennungsluft vorgeschaltet ist.

5. Einrichtung nach Anspruch 4 dadurch gekennzeichnet, Vorlagebehälter (12) für das Rohstoffgemenge, in dem das Rohstoffgemenge durch Schwerkrafteinwirkung an Schikanen vorbei nach unten förderbar ist, und wenigstens eine seitliche untere Eintritts- (13) sowie wenigstens eine obere Austritsöffnung (14) für die Wannenabgase vorgesehen sind wobei die Eintrittsöffnung (13) in einen horizontalen am gegenüberliegenden Ende geschlossenen Eintritts-Strömungskanal (15) im Rohstoffgemenge mündet, der an seiner Oberseite durch ein konvexes, beispielsweise umgekehrt V-förmiges Dach (16) und an seiner Unterseite durch im natürlichen Böschungswinkel liegendes Rohstoffgemenge begrenzt ist, daß eine Mehrzahl von verteilt angeordneten Eintritts- (13) und Austrittsöffnungen (14) vorgesehen ist, und daß jeder Austrittsöffnung (14) ein den tritts-5trömungskanälen (15) entsprechender Austritts-Strömungskanal (18) zugeordnet ist.

6. Einrichtung nach Anspruch 4, dadurch gekennzeichnet, daß ein Behälter (30) zur Aufnahme kalkhaltiger Filterkörner zur Abscheidung staubförmiger und/oder gasförmiger Bestandteile wie anorganischer Fluoride aus den Wannenabgase vorgesehen ist, daß der Behälter (30) in einzelne Kammern (31) unterteilt ist, in denen die ruhenden Filterkörner von den Wannenabgasen durchströmbar sind und daß die selektiv zum Austrag des Staubes und/oder verbrauchter Filterkörner und zum Eintrag gereinigter oder frischer Filterkörner gegenüber den strömenden Wannenabgasen abschließbar gehalten sind.

7. Einrichtung nach Anspruch 6, dadurch gekennzeichnet, daß die Kammern (31) in an sich bekannter Weise Strömungskanäle (38, 40) für das Wannenabgas aufweisen, welche in der Schüttung aus Filterkörnern an ihrer Oberseite durch ein konvexes, beispielsweise umgekehrt V-förmiges Dach (42) und an ihrer Unterseite durch im natürlichen Böschungswinkel liegende Filterkörner begrenzt sind.

8. Einrichtung nach Anspruch 7, dadurch gekennzeichnet, daß eine Mehrzahl übereinander und versetzt zueinander angeordneter Strömungskanäle (38, 40) vorgesehen ist, die zum einen Teil als Eintritts-Strömungskanäle (38) an der eintrittsseitigen Stirnseite offen und an der gegenüberliegenden Austrittsseite geschlossen und zum anderen Teil als Austritts-Strömungskanäle (40) an der eintrittsseitigen Stirnseite geschlossen und an der Austrittsseite offen sind.

9. Einrichtung nach Anspruch 8, dadurch gekennzeichnet, daß an der stirnseitigen Eintrittsseite der Eintritts-Strömungskanäle (38) ein allen Kammern (31) gemeinsamer Abgasvorlageraum (35) angeordnet ist, und daß an die Austrittsseite der Austritts-Strömungskanäle (40) ein für jede Kammer (31) separater Abgassammelraum (41) vorgesehen ist, dessen Strömungsaustritt selektiv absperrbar ist.

10. Einrichtung nach Anspruch 9, dadurch gekennzeichnet, daß die Kammern (31) voneinander durch Trennwände (32) abgeteilt sind, welche zumindest einen Teil der Eintritts-Strömungskanäle (38) in zwei Hälften unterteilt, die je einer der benachbarten Kammern (31) zugeordnet sind.

11. Einrichtung nach einem der Ansprüche 6 bis 10 dadurch gekennzeichnet daß eine Regenerierungseinrichtung für die Filterkörner, Beseitigung oberflächenseitiger Staubablagerungen vorgesehen ist, wobei der so erhaltene Staub gegebenenfalls wieder der Schmelzwanne zuführbar ist, und daß die Filterkörner zur Beseitigung von oberflächennahen, ein Eindringen von Fluor behindernden Hemmschichten aus anderen adsorbierten gasförmigen Bestandteilen, wie insbesondere Chlor, einer Einrichtung zum Abrieb von Oberflächenschichten zuführbar sind.

12. Einrichtung Anspruch 11, dadurch gekennzeichnet, daß die Einrichtung zum Abrieb von Oberflächenschichten als Schüttelsieb (47) ausgebildet ist.

13. Einrichtung nach Anspruch 11 oder 12, dadurch gekennzeichnet, daß die Förderung der zu regenerierenden Filterkörner zwischen dem Behälter (30) zur Aufnahme der kalkhaltigen Filterkörner und der Einrichtung zum Abrieb von Oberflächenschichten durch Schwingförderer (46) erfolgt.

## Claims

1. Method of melting silicate raw materials, particularly for the manufacture of mineral wool, preferably rock wool, from basalt
in which the melting heat is supplied by the combustion of fossil fuels in a melting vat (1), and
in which intitially the combustion air, then, in direct contact, the raw material mixture supplied is preheated by means of the vat exhaust gases, the combustion air only being preheated until the reduction in temperature of the vat exhaust gases is equal to the maximum permissible inlet temperature in the region of the raw material preheater (9),
characterised
in that the vat exhaust gases are again brought into heat exchange with the combustion air, which is still cool, after preheating of the raw material mixture, and
in that the vat exhaust gases between the raw material preheating (9) and the further combustion air preheating (23) stages are cleaned (cleaning device 21) for the widest possible use of the residual heat content of the vat exhaust gases without acid condensation of acid, gaseous, aggresive media such as fluorine.

2. Method according to claim 1, characterised in that the further heat exchange with the combustion air is carried out regeneratively.

3. Method according to claim 1 or 2, characterised in that the separated impurities of the melt are resupplied.

4. Device for implementing the method according to one of claims 1 to 3, with a fossil fuel fired melting vat (1), with a preheater (5) through which the vat exhaust gases flow, for combustion air, and with a mixture preheater (9) which is connected in the current path of the vat exhaust gases behind the preheater (5), and in which the vat exhaust gases are in direct contact with the raw material mixture,
characterized
in that a cleaning device (21) is connected in series to the mixture preheater (9) for the vat exhaust gases to remove acid gaseous aggressive media such as fluorine, and in that a second preheater (23) for combustion air is again connected in series to the cleaning device (21), which preheater is connected in the current path of the combustion air in series with a first preheater (5) for combustion air.

5. Device according to claim 4, characterized in that a receiver tank (12) for the raw material mixture, into which the raw material mixture can be conveyed down past chicanes by the effect of gravity, in that at least one lateral lower inlet port (13), and at least one upper outlet port (14) are provided for the vat exhaust gases, the inlet port (13) opening into a horizontal inlet flow duct (15), closed at the opposite end, in the raw material mixture, which duct is bounded at its top by convex, for example reverse V-shaped roof (16), and at its bottom by raw material mixture lying at the natural angle of curvature, in that a plurality of evenly distributed inlet (13) and outlet ports (14) is provided, and in that an outlet flow duct (18), corresponding to the inlet flow ducts (15), is assigned to each outlet port (14).

6. Device according to claim 4, characterized in that a tank (30) is provided for receiving filter grains containing lime, and for separating dust-like and/or gaseous constitutents such as inorganic fluorides from the vat gases, in that the tank (30) is divided into individual chambers (31) in which the filter grains are able to flow from the vat exhaust gases, and in that the vat exhaust gases used selectively for discharging the dust and/or consumed filter grains, and for feeding in cleaned or fresh filter grains, in the opposite direction to the flowing gases, can be kept sealed.

7. Device according to claim 6, characterized in that the chambers (31) is provided, by a known method, with flow ducts (38, 40) for the vat exhaust gas which are bounded, in the backfill of filter grains, at its top, by a convex, for example reverse V-shaped roof (42), and at its bottom by filter grains lying at the natural angle of curvature.

8. Device according to claim 7, characterized in that a plurality of flow ducts (38, 40), arranged above and offset in relation to each other, is provided, some of which ducts are open on the front inlet side, as inlet flow ducts (38), and closed on the opposite outlet side, and some of which are closed on the front inlet side, as outlet flow ducts (49), and are open on the outlet side.

9. Device according to claim 8, characterized in that an exhaust storage space (35) common to all chambers (31) is arranged on the front inlet side of the inlet flow ducts (38), and in that an exhaust gas collection space (41), separate for each chamber (31), is provided whose flow outlet can be selectively shut off.

10. Device according to claim 9, characterised in that the chambers (31) are separated from each other by partitions (32) which divide at least some of the inlet flow channels (38) into two halves, each of which is assigned to one of the adjacent chambers (31).

11. Device according to one of claims 6 to 10, characterised in that a regenerating device is provided for the filter grains, with the removal of dust deposits on the superficial side, the dust thus obtained being fed back to the melting vat, and in that the filter grains can be supplied to a device for rubbing off surface layers, for removing inhibiting layers of other adsorbed gaseous constituents, particularly chlorine, preventing the penetration of chlorine.

12. Device according to claim 11, characterised in that the device for rubbing of surface layers is designed as a vibrating screen.

13. Device according to claim 11 or 12, characterised in that the conveying of the filter grains to be regenerated takes place by means of intermediate conveyors between the tank (30) for receiving the filter grains containing lime, and the device for rubbing off surface layers.

**Revendications**

1. Procédé pour la fusion de matières premières silicieuses, en particulier pour la fabrication de laine minérale, et de préférence de laine minérale à partir de basalte,

dans lequel la chaleur de fusion est amenée à une cuve de fusion (1) par combustion de combustibles fossiles, et :

dans lequel on préchauffe, au moyen des gaz de combustion de la cuve, tout d'abord l'air de combustion, ainsi qu'ensuite, par contact direct, le mélange de matières premières introduit, le préchauffage de l'air de combustion n' étant réalisé que jusqu'à une diminution de température des gaz de combustion de la cuve qui correspond à la température maximale admissible pour l'entrée dans la zone du préchauffeur de matières premières (9), caractérisé par le fait :

qu'après le préchauffage du mélange de matières premières, les gaz de combustion de la cuve sont à nouveau amenés en situation d'échange thermique avec l'air de combustion qui est encore froid, et :

qu'entre le préchauffage des matières premières (9) et l'autre préchauffage de l'air de combustion (23), et en vue de la plus large exploitation possible de la chaleur résiduelle contenue dans les gaz de combustion de la cuve sans condensation d'acide, les gaz de combustion de la cuve sont purifiés des agents agressifs gazeux et acides comme le fluor (dispositif de purification 21).

2. Procédé selon la revendication 1, caractérisé par le fait que l'autre échange de chaleur avec l'air de combustion est réalisé de manière régénérative.

3. Procédé selon la revendication 1 ou 2, caractérisé par le fait que les impuretés séparées sont ramenées au bain fondu.

4. Dispositif pour la mise en oeuvre du procédé selon l'une des revendications 1 à 3, comprenant une cuve de fusion (1) à combustibles fossiles, un préchauffeur (5) destiné à l'air de combustion et parcouru par les gaz de combustion de la cuve, et un préchauffeur de mélange (9) qui est monté en aval du préchauffeur (5) sur le trajet d'écoulement des gaz de combustion de la cuve et dans lequel les gaz de combustion de la cuve arrivent en contact direct avec le mélange de matières premières, caractérisé par le fait qu'un dispositif de purification (21) destiné aux gaz de combustion de la cuve en vue de l'élimination des agents agressifs gazeux et acides comme le fluor est monté en aval du préchauffeur de mélange (9), et par le fait qu'un deuxième préchauffeur (23) destiné à l'air de combustion est à son tour monté en aval du dispositif de purification (21) en étant monté en amont du premier préchauffeur (5) destiné à l'air de combustion sur le trajet de l'écoulement de l'air de combustion.

5. Dispositif selon la revendication 4, caractérisé par le fait qu'il est prévu un réservoir de mélange de matières premières (12) dans lequel le mélange de matières premières peut se déplacer vers le bas sous l'effet de la pesanteur en passant sur des chicanes, et au moins une ouverture d'entrée inférieure latérale (13), ainsi qu'au moins une ouverture de sortie supérieure (14) pour les gaz de combustion de la cuve, l'ouverture d'entrée (13) débouchant dans le mélange de matières premières dans un canal d'écoulement d'entrée horizontal (15) qui est fermé à l'extrémité opposée, qui est limité sur son côté supérieur par un toit convexe (16), par exemple en forme de V inversé, et sur son côté inférieur par le mélange de matières premières qui présente son angle de talus naturel, par le fait qu'il est prévu une pluralité d'ouvertures d'entrée (13) et de sortie (14) disposées de manière répartie, et par le fait qu'un canal d'écoulement de sortie (18) correspondant aux canaux d'écoulement d'entrée (15) est associé à chaque ouverture de sortie (14).

6. Dispositif selon la revendication 4, caractérisé par le fait qu'il est prévu un réservoir (30) pour recevoir des grains de filtrage calcaires en vue de séparer des gaz de combustion de la cuve les constituants pulvérulents et/ou gazeux comme les fluorures minéraux, par le fait que le réservoir (30) est divisé en chambres individuelles (31) dans lesquelles les gaz de combustion de la cuve peuvent passer à travers les grains de filtrage qui y reposent, et par le fait qu'elles peuvent être maintenues fermées sélectivement par rapport aux gaz de combustion de la cuve qui s'écoulent, en vue de l'évacuation de la poussière et/ou des grains de filtrage usés et pour le chargement de grains de filtrage purifiés ou frais.

7. Dispositif selon la revendication 6, caractérisé par le fait que les chambres (31) comportent de manière connue des canaux d'écoulement (38, 40) qui sont destinés aux gaz de combustion de la cuve et qui, dans la masse de grains de filtrage déversés, sont limités sur leur côté supérieur par un toit convexe (42), par exemple en forme de V inversé, et sur leur côté inférieur par les grains de filtrage qui reposent selon leur angle de talus naturel.

8. Dispositif selon la revendication 7, caractérisé par le fait qu'il est prévu une pluralité de canaux d'écoulement (38, 40) disposés les uns au-dessus des autres et décalés les uns par rapport aux autres qui, pour une partie, sont des canaux d'écoulement d'entrée (38) ouverts du côté frontal situé du côté de l'entrée et fermés du côté de la sortie opposé et qui, pour l'autre partie, sont des canaux d'écoulement de sortie (40) fermés du côté frontal situé du côté de l'entrée et ouverts du côté de la sortie.

9. Dispositif selon la revendication 8, caractérisé par le fait qu'un espace d'alimentation en gaz de combustion (35) commun à toutes les chambres (31) est disposé sur le côté frontal d'entrée des canaux d'écoulement d'entrée (38), et par le fait que, du côté de la sortie des canaux d'écoulement de sortie (40), il est prévu un espace collecteur des gaz de combustion (41) qui est distinct pour chaque chambre (31) et dont la sortie de l'écoulement peut être fermée de manière sélective.

10. Dispositif selon la revendication 9, caractérisé par le fait que les chambres (31) sont séparées l'une de l'autre par des parois de séparation (32) qui divisent une partie au moins des canaux d'écoulement d'entrée (38) en deux moitiés qui sont à chaque fois associées à l'une des chambres voisines (31).

11. Dispositif selon l'une des revendications 6 à 10, caractérisé par le fait qu'il est prévu un dispositif de régénération des grains de filtrage éliminant les dépôts superficiels de poussière, la poussière ainsi obtenue pouvant être le cas échéant ramenée à la cuve de fusion, et par le fait que les grains de filtrage peuvent être amenés à un dispositif d'abrasion des couches superficielles en vue de l'élimination des couches de blocage proches de la surface qui empêchent la pénétration du fluor et qui proviennent d'autres constituants gazeux adsorbés, comme en particulier le chlore.

12. Dispositif selon la revendication 11, caractérisé par le fait que le dispositif d'abrasion des couches superficielles est réalisé sous la forme d'un crible à secousses (47).

13. Dispositif selon la revendication 11 ou 12, caractérisé par le fait que le transport des grains de filtrage à régénérer entre le réservoir (30) destiné à recevoir les grains de filtrage calcaires et le dispositif d'abrasion des couches superficielles a lieu au moyen d'un convoyeur oscillant (46).

Fig. 1

Fig. 2

Fig. 3